# EUROPÄISCHE PATENTANMELDUNG

(11) **EP 0 976 647 A2**
(43) Veröffentlichungstag der Anmeldung: **02.02.2000**
(21) Anmeldenummer: 99103864.7
(22) Anmeldetag: 01.03.1999
(51) Int. Cl.: B62J 9/00, A41D 13/00

(54) **Packtasche für Fahrradbekleidung**

(30) Priorität: 31.07.1998 DE 29813557 U
(71) Anmelder: Jeantex Sportswear GmbH & Co. KG, 25462 Rellingen (DE)
(72) Erfinder: Linden, Wolfgang, 22399 Hamburg (DE)
(74) Vertreter: Richter, Werdermann & Gerbaulet

(57) **Zusammenfassung**

Um eine Packtasche (100) für Regenjacken o. dgl. zu schaffen, die einen einfachen und behinderungsfreien Transport auf einem Fahrrad erlaubt, wird vorgeschlagen, dass die Packtasche (100) über Verschlussmittel zum Verschließen der Öffnung (13) der Packtasche (100) und Befestigungsmittel zum Befestigen der Packtasche (100) an einem Fahrradrahmen (31), an denen die Packtasche (100) über Verbindungsmittel wieder lösbar festlegbar ist, verfügt.

## Beschreibung

Die Erfindung betrifft eine Packtasche für Fahrradbekleidung, die an einem Fahrrad befestigbar ist.

Da während einer Fahrradtour sich die Wetterbedingungen sehr schnell ändern können, wird von Radfahren sehr häufig eine Regenjacke, eine Windjacke o. dgl. mitgeführt, um sich den ändernden Wetterbedingungen anpassen können. Allerdings besitzen moderne Sporträder, wie z. B. Mountain-Bikes oder Rennräder in der Regel keinen Gepäckträger oder Packtaschen, auf bzw. in denen derartige Kleidungsstücke verstaut werden könnten. Daher sind beispielsweise Regenjacken bekannt, die in einer Tasche des Kleidungsstückes integriert, einen Packbeutel aufweisen, der mit elastischen Bändern ausgestattet ist, mittels derer das im Packbeutel befindliche Kleidungsstück um die Hüften geschnallt werden kann. Für den sportlichen Radfahrer sind diese Regenjacken aber nicht geeignet, da die elastischen Bänder den Radfahrer einengen können bzw. beim Bewegungsablauf hinderlich sein können.

Ebenso ungeeignet für den sportlichen Radfahrer sind zusätzlich zu montierende Packtaschen, in denen die Kleidungsstücke verstaut werden könnte, da die Packtaschen und das Zubehör zu sperrig und/oder zu schwer sind. Derartige Packtaschen werden über Bügel, Riemen oder Adapter mit Schnellverschlüssen am Lenker, Rahmen oder auch an der Sattelstütze befestigt.

Es ist daher Aufgabe der Erfindung, eine Packtasche für Regenjacken o. dgl. zu schaffen, die einen einfachen und behinderungsfreien Transport auf einem Fahrrad erlaubt.

Diese Aufgabe wird durch die Merkmale des Anspruchs 1 gelöst.

Dazu ist erfindungsgemäß vorgesehen, eine Packtasche für Fahrradbekleidung, derart auszugestalten, dass die Packtasche über Verschlussmittel zum Verschließen der Packtasche und Befestigungsmittel zum Befestigen der Packtasche an einem Fahrradrahmen, an denen die Packtasche wieder lösbar festlegbar ist, verfügt.

Die Verschlussmittel können in vielfältiger Weise ausgestaltet sein. So können Schnurzüge, Klettverschlüsse, Reißverschlüsse o. dgl. verwendet werden, wobei die Kombination mit einer die Öffnung der Packtasche und damit auch des Verschlussmittels überdeckenden Lasche von Vorteil ist. Mit derartigen Verschlußmitteln ergibt sich der ganz wesentliche Vorteil, dass die Befestigung ohne Werkzeug erfolgt.

Als Befestigungsmittel werden nach einer bevorzugten Ausführungsform Klettbänder verwendet, die um bestimmte Rohre des Fahrradrahmens oder den Lenker geschlungen und festgelegt werden. Diese Befestigungsmittel verfügen weiterhin über Verbindungsmittel, die es erlauben die Packtasche mit den Befestigungsmittel reversibel zu verbinden. Dazu können bevorzugterweise Druckknöpfe, Klettverschlüsse, Gurtschlösser o. dgl. verwendet werden. Von Bedeutung ist nur, dass die Verbindungsmittel einen sichern Halt der Packtasche an den Befestigungsmitteln und eine einfache Handhabung gewähren.

Nach einer bevorzugten Ausführungsform der Packtasche verfügt diese über drei Klettbandriegel als Befestigungsmittel, die derart ausgestaltet sind, dass Haken- und Schlingenband im angelegten Zustand aufeinander liegen. Die Länge eines Klettbandriegels liegt im Bereich von 10 bis 20 cm, wobei mittig ein Druckknopf als Verbindungsmittel angeordnet ist. Die Packtasche, die vorzugsweise eine lang gestreckte und flache Form aufweist, verfügt an einer Längsseite über zwei korrespondierende Druckknöpfe und an einer Kurzseite über einen Druckknopf, so dass die Packtasche im Bereich sich kreuzender Rohre, z. B. im Eck zwischen Oberrohr und Sitzrohr befestigt werden kann, ohne dass die Packtasche beim Fahren schwingt.

Die Anordnung der Klettbänder und damit der Packtasche ist jedoch vollkommen frei und kann vom Radfahrer nach eigenen Vorlieben vorgenommen werden. Durch die Verwendung der Klettband-riegel wird die Befestigung auch nicht durch Schalt- oder Bremszüge erschwert, die vielfach entlang des Oberrohrs geführt sind, da die Klettbandriegel unter den Zügen hindurchgeführt werden können. Weiterhin stellen unterschiedliche Rohrdurchmesser kein Problem dar, da eine stufenlose Anpassung der Bänder möglich ist.

Bevorzugterweise ist die Packtasche mit dem darin zu verstauenden Kleidungsstück über eine Schnur o. dgl. verbunden, so dass die Packtasche bei Benutzung des Kleidungsstückes nicht verloren werden kann. Eine andere bevorzugte Ausführungsform besteht darin, die Packtasche als Bestandteil des Kleidungsstückes auszugestalten. So kann die Packtasche z. B in einem Bereich, in dem sie den Radfahrer nicht stört, angenäht sein oder die Packtasche wird durch eine Innentasche des Kleidungsstückes durch Umstülpen ausgebildet. Um das Kleidungsstück, in der Regel eine Regenjacke o. dgl., benutzen zu können, wird die Packtasche von den Befestigungsmitteln gelöst, die am Fahrrad verbleiben, und die Regenjacke herausgezogen. Umgekehrt kann die Packtasche, in der die verpackte Regenjacke befindlich ist, problemlos über die Druckknöpfe wieder an die Klettbandriegel angeknöpft werden.

Das Material der Packtasche ist vorzugsweise Schmutz abweisend und wasserdicht, wie z. B. mit Polyurethan beschichtete Kunstfasergewebe oder Folien.

Durch die erfindungsgemäße Packtasche für Fahrradkleidung, die am Rahmen eines Fahrrades reversibel festlegbar ist, ist es vorteilhafterweise gewährleistet, dass im Bedarfsfall der Radfahrer schnell mit dem notwendigen Kleidungsstück versorgt werden kann, wobei dies ggf. auch während der Fahrt erfolgen kann, ohne dass der Radfahrer in irgendeiner Weise durch die Mitnahme der Packtasche bzw. des entsprechenden Kleidungsstückes behindert würde.

Weitere vorteilhafte Ausgestaltungen sind in den Unteransprüchen gekennzeichnet.

Nachstehend wird die Erfindung anhand von Zeichnungen näher erläutert. Es zeigen
- Fig. 1.: in einer schematischen Ansicht eine erfindungsgemäße Packtasche mit einer daran über eine Schnur festgelegten Regenjacke,
- Fig. 2.: in einer schaubildlichen Ansicht eine erfindungsgemäße Packtasche mit einer darin befindlichen Regenjacke,
- Fig. 3.: in einer Seitenansicht ein Klettbandriegel der erfindungsgemäßen Packtasche,
- Fig. 4.: in einer geschnittenen Ansicht ein um ein Rahmenrohr eines Fahrrades gelegter Klettbandriegel,
- Fig. 5.: in einer Detailansicht eine an einem Fahrradlenker festgelegte erfindungsgemäße Packtasche, und
- Fig. 6.: in einer Detailansicht eine an Ober- und Sitzrohr eines Fahrrades festgelegte erfindungsgemäße Packtasche,.

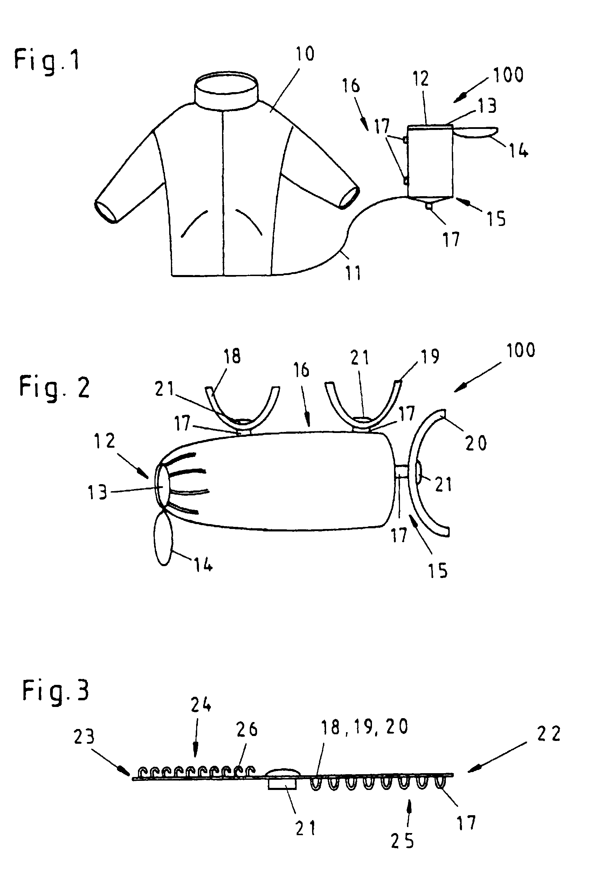

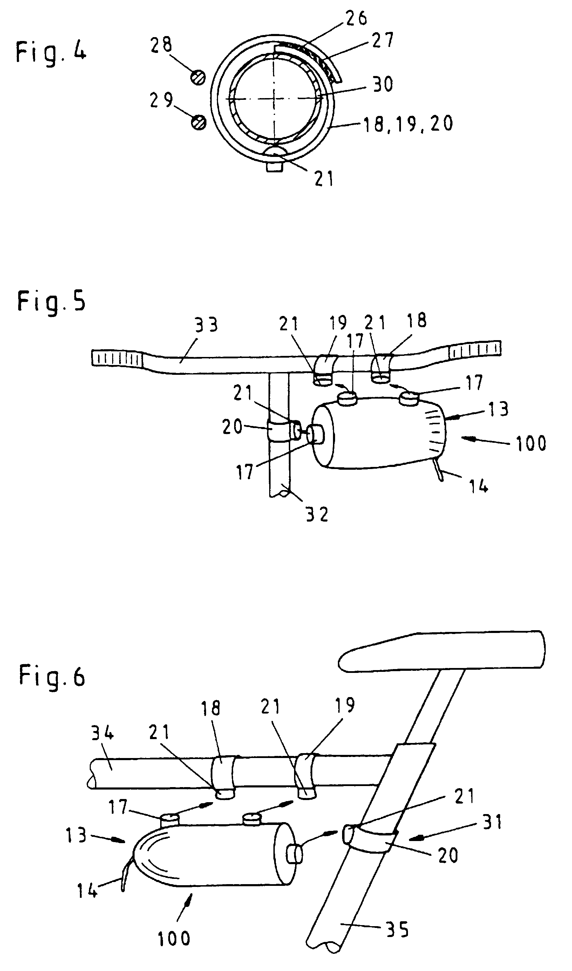

Die erfindungsgemäße Packtasche 100 gemäß Fig. 1 ist mit einer Regenjacke 10 über eine Schnur 11 verbunden, so dass die Packtasche 100 bei Benutzung der Regenjacke 10 nicht verloren werden kann. Die Packtasche 100 weist eine im Wesentlichen lang gestreckte Form auf, wobei an einer Kurzseite 12 eine Öffnung 13 vorgesehen ist, die mittels eines Schnurzuges 14 verschließbar ist. An der anderen Kurzseite 15 und einer der Längsseiten 16 der Packtasche 100 befindet sich ein bzw. zwei Druckknöpfe 17, über die jeweils ein Klettbandriegel 18, 19, 20, die über korrespondierende Druckknöpfe 21 verfügen, an der Packtasche 100 reversibel festgelegt werden. Die Klettbandriegel 18, 19, 20 bestehen aus einem Band, das mittig den Druckknopf 21 und an den Enden 22, 23 auf gegenüberliegenden Seiten 24, 25 die Haken 26 und die Schlingen 27 des Klettverschlusses aufweisen. Die Enden 22, 23 mit den Haken 26, und den Schlingen 27 kommen im montiertem Zustand (Fig. 4) aufeinander zu liegen. Schalt- und Bremszüge 28, 29, die parallel zu den Rohren 30 eines nicht näher dargestellten Fahrradrahmens 31 verlaufen, werden vom Klettbandriegel 18, 19, 20 nicht umschlungen, es wird vielmehr der Klettbandriegel 18, 19, 20 unter den Schalt- und Bremszügen 28, 29 durchgeführt. Die Packtasche 100 wird sinnvollerweise in einem Winkel des hier nicht vollständig dargestellten Fahrrades, wie z. B. zwischen Vorbau 32 und Lenker 33 (Fig. 5) oder zwischen Oberrohr 34 und Sitzrohr 35 (Fig. 6) befestigt, so dass, bedingt durch die Anordnung der Klettbandriegel 18, 19, 20 an zwei Seiten der Packtasche 100, die Packtasche nicht schwingen kann.

### Bezugszeichenliste

- Packtasche: 100
- Regenjacke: 10
- Schnur: 11
- Kurzseite: 12
- Öffnung: 13
- Schnurzug: 14
- Kurzseite: 15
- Längsseite: 16
- Druckknopf: 17
- Klettbandriegel: 18, 19, 20
- Druckknopf: 21
- Ende: 22,23
- Seite: 24,25
- Haken: 26
- Schlinge: 27
- Schaltzug: 28
- Bremszug: 29
- Rohr: 30
- Fahrradrahmen: 31
- Vorbau: 32
- Lenker: 33
- Oberrohr: 34
- Sitzrohr: 35

## Patentansprüche

1. Packtasche (100) für Fahrradbekleidung, die an einem Fahrrad befestigbar ist, dadurch gekennzeichnet, dass die Packtasche (100) über Verschlussmittel zum Verschließen der Öffnung (13) der Packtasche (100) und Befestigungsmittel zum Befestigen der Packtasche (100) an einem Fahrradrahmen (31), an denen die Packtasche (100) über Verbindungsmittel wieder lösbar festlegbar ist, verfügt.

2. Packtasche nach Anspruch 1, dadurch gekennzeichnet, dass die Befestigungsmittel jeweils aus einem Klettbandriegel (18, 19, 20) bestehen, die um Rahmenrohre eines Fahrrades legbar sind, wobei die Klettbandriegel (18, 19, 20) an den Enden (22, 23) und auf gegenüberliegenden Seiten (24, 25) Haken (26) und Schlingen (27) zur Ausbildung eines Klettverschlusses aufweisen.

3. Packtasche nach Anspruch 1, dadurch gekennzeichnet, dass die Befestigungsmittel Gurte sind, die mittels Gurtschlössern oder Druckknöpfen an Rahmenrohren eines Fahrrades festlegbar sind.

4. Packtasche nach einem der Ansprüche 1 bis 3, dadurch gekennzeichnet, dass die Verbindungsmittel Druckknöpfe (17, 21), Klettverschlüsse oder Gurtschlösser sind, deren Einzelteile am Befestigungsmittel und der Packtasche (100) festgelegt sind.

5. Packtasche nach einem der Ansprüche 1 bis 4, dadurch gekennzeichnet, dass das Verschlussmittel ein Schnurzug (14), ein Klettverschluss oder ein Reißverschluss ist.

6. Packtasche nach einem der Ansprüche 1 bis 5, dadurch gekennzeichnet, die Öffnung (13) im geschlossenem Zustand von einer Klappe überdeckt wird.

7. Packtasche nach einem der Ansprüche 1 bis 6, dadurch gekennzeichnet, dass das in der Packtasche (100) zu verpackende Kleidungsstück mit der Packtasche (100) über eine Schnur (11) oder ein Band verbunden ist.

8. Packtasche nach einem der Ansprüche 1 bis 6, dadurch gekennzeichnet, dass die Packtasche (100) am zu verpackenden Kleidungsstück festgenäht ist

9. Packtasche nach einem der Ansprüche 1 bis 6, dadurch gekennzeichnet, dass die Packtasche (100) durch eine Innentasche des zu verpackenden Kleidungsstückes ausgebildet wird

10. Packtasche nach einem der Ansprüche 1 bis 9, dadurch gekennzeichnet, dass das zu verpackende Kleidungsstück eine Regenjacke (10), eine Windjacke oder ein Windlatz ist.

11. Packtasche nach einem der Ansprüche 1 bis 10, dadurch gekennzeichnet, dass die Packtasche (100) aus einem wasserdichten und/oder Schmutz abweisenden Material besteht.

12. Packtasche nach einem der Ansprüche 1 bis 3, dadurch gekennzeichnet, dass die Packtasche (100) aus einem beschichteten Kunstfasergewebe besteht.
